# EUROPÄISCHE PATENTSCHRIFT

(11) **EP 2 332 846 B1**
(45) Veröffentlichungstag und Bekanntmachung des Hinweises auf die Patenterteilung: **25.06.2014**
(21) Anmeldenummer: 10194446.0
(22) Anmeldetag: 10.12.2010
(51) Int. Cl.: B65C 9/40, B67B 3/26, B67C 3/00, B29C 49/42, B29C 49/78

(54) **Vorrichtung und Verfahren zur Behandlung von Behältnissen mit Garniturerkennung**
Device for handling containers with combined format section and installation monitoring
Dispositif de traitement de récipients à l'aide d'un établissement d'éléments de format et d'encastrement combiné

(30) Priorität: 14.12.2009 DE 102009058086
(43) Veröffentlichungstag der Anmeldung: 15.06.2011
(73) Patentinhaber: Krones AG, 93073 Neutraubling (DE)
(72) Erfinder: Ziegler, Manfred, 94034, Passau (DE)
(74) Vertreter: Hannke, Christian

(56) Entgegenhaltungen:
- WO-A1-03/025833
- WO-A1-2005/068301
- WO-A1-2008/145345
- DE-A1- 19 941 485
- US-A1- 2005 194 705

## Beschreibung

### Beschreibung

Die vorliegende Erfindung bezieht sich auf eine Vorrichtung und ein Verfahren zum Behandeln von Behältnissen gemäß dem Oberbegriff des Anspruchs 1, bzw. 8, und wie aus der WO 2008/145345 bekannt. Derartige Vorrichtungen und Verfahren sind aus dem Stand der Technik seit langem bekannt und umfassen dabei beispielsweise Vorrichtungen zum Etikettieren von Behältnissen, Vorrichtungen zum Befüllen von Behältnissen, Vorrichtungen zum Umformen von Kunststoffvorformlingen zu Behältnissen, Vorrichtungen zum Erstellen von Gebinden aus Behältnissen, Palettierer und dergleichen.

Dabei werden bei derartigen Maschinen oftmals Formatteile eingesetzt, die eingewechselt werden können, um beispielsweise unterschiedliche Behältnistypen zu behandeln. Auch können derartige Formatteile im Falle eines Verschleißes ersetzt werden. Bei einem derartigen Ersatz von Formatteilen ist auf viele Gegebenheiten zu achten. So ist sicherzustellen, dass ein Formatteil eingesetzt wird, welches auf die Vorrichtung selbst angepasst ist. Weiterhin ist jedoch auch sicherzustellen, dass das Formatteil ordnungsgemäß an der Vorrichtung angeordnet und beispielsweise auch an dem korrekten Ort innerhalb einer Anlage montiert wird. Damit sollen Systeme geschaffen werden, welche eine sichere Erkennung von Rüstteilen bzw. Garnituren oder Formatteilen erlauben, wobei diese Erkennung insbesondere auch behältersortenabhängig sein kann.

Im internen Stand der Technik der Anmelderin wird dabei teilweise eine flexible Abfragung der Formatteile mittels eines Handlesegerätes durchgeführt. Dabei ist nicht auszuschließen, dass aufgrund des großen Aktionsradius des Handlesegerätes auch unter Umständen nicht montierte bzw. bereit gestellte Formatteile eingescannt werden, die wiederum nicht mit dem direkten Rüstvorgang in Beziehung stehen.

Der vorliegenden Erfindung liegt daher die Aufgabe zugrunde, sicherzustellen bzw. eine höhere Gewähr dafür zu bieten, dass auch tatsächlich das betreffende Formatteil an seinem korrekten Ort eingebaut wird. Dies wird erfindungsgemäß durch die Gegenstände der unabhängigen Ansprüche erreicht. Vorteilhafte Ausführungsformen und Weiterbildungen sind Gegenstand der Unteransprüche.

Eine erfindungsgemäße Vorrichtung zum Behandeln von Behältnissen weist wenigstens eine Transporteinrichtung auf, welche die Behältnisse entlang eines vorgegebenen Transportpfades transportiert. Weiterhin ist wenigstens eine Behandlungseinrichtung vorgesehen, welche das Behältnis in einer vorbestimmten Weise behandelt, wobei die Vorrichtung wenigstens ein Formatteil aufweist, welches wechselbar an der Vorrichtung bzw. einem Träger dieser Vorrichtung anordenbar ist bzw. angeordnet werden kann.

Erfindungsgemäß ist an dem Formatteil eine erste Sendeeinrichtung angeordnet, welche wenigstens zeitweise ein Signal ausgibt, welches für diese Sendeeinrichtung (und damit auch für das betreffende Formatteil) charakteristisch ist. Weiterhin weist die Vorrichtung wenigstens eine erste Empfangseinrichtung zum Empfangen des ersten Signals auf, und weiterhin weist die Vorrichtung eine zweite Sendeeinrichtung auf, welche ein zweites charakteristisches Signal ausgibt, wobei die Empfangseinrichtung derart gestaltet ist, dass sie aus den ausgegebenen Signalen bestimmt, ob das Formatteil in einer vorgegebenen Position gegenüber der Vorrichtung ist.

Bei der Kommunikationseinrichtung handelt es sich bevorzugt um eine weitere Sendeeinrichtung, so dass im Folgenden vor allem auch der Begriff zweite Sendeeinrichtung verwendet wird.

Es wird damit sichergestellt, dass das richtige Formatteil an der richtigen Position angeordnet werden soll bzw. erfasst wird. Bei der Empfangseinrichtung kann es sich beispielsweise auch um ein tragbares Gerät handeln, welches die entsprechende erste Sendeeinrichtung und ggf. auch die zweite Sendeeinrichtung auslesen kann. Die erste Sendeeinrichtung gibt dabei das Signal insbesondere drahtlos aus und insbesondere nicht nur in einer vorbestimmten Richtung sondern in einem vorbestimmten Umkreis.

Vorteilhaft ist die zweite Sendeeinrichtung ortsfest gegenüber der Vorrichtung angeordnet. Dabei ist es möglich, dass diese zweite Sendeeinrichtung fest mit der Vorrichtung verbaut ist bzw. untrennbar an diese angeordnet ist, so dass sie insbesondere nicht ohne Substanzbeeinträchtigung von der Vorrichtung entfernt werden kann. Vorteilhaft ist auch die erste Sendeeinrichtung fest an dem Formatteil angeordnet und kann besonders bevorzugt nicht ohne Substanzbeeinträchtigung von dem Formatteil entfernt werden. Es wäre jedoch auch möglich, dass auch die zweite Sendeeinrichtung an dem Formatteil angeordnet ist und beispielsweise erfasst, ob das Formatteil korrekt an der Vorrichtung angeordnet ist, ob beispielsweise ein Verriegelungsmechanismus, der das Formatteil an der Vorrichtung befestigt, korrekt geschlossen ist.

Bei einer weiteren vorteilhaften Ausführungsform weist die Empfangseinrichtung eine Zeiterfassungseinrichtung auf, welche einen Zeitabstand zwischen zwei von ihr empfangenen Signalen der beiden Sendeeinrichtungen bestimmt. So ist es möglich, dass ein Rüstvorgang nur dann als gültig gewertet wird, wenn das Signal des abzutragenden Formatteiles und die zweite vorteilhaft fest installierte Sendeeinrichtung innerhalb eines definierten Zeitrasters abgetastet werden. Auch ist es denkbar, dass sich die zwei Sendeeinrichtungen im Nahbereich eines Empfangsgerätes befinden und gemeinsam abgetastet werden können. Auf diese Weise wird ebenfalls eine korrekte Anordnung, d. h., die richtige Platzierung des Formatteiles sichergestellt. Durch die erfindungsgemäße Vorgehensweise ist es auch möglich, einen Missbrauch der Abfrageeinrichtung bzw. der Empfangseinrichtung zu vermeiden und - wie erwähnt - neben den ersten Sendeeinrichtungen auch noch die zweiten Sendeeinrichtungen abzufragen, um auf diese Weise während des Lesevorganges einen Überwachungsvorgang zu starten, der es verhindert, dass nicht korrekt installierte Rüstteile abgescannt werden.

Vorteilhaft weist die Empfangseinrichtung eine Vergleichseinrichtung auf, die zwei empfangene Signale der beiden Sendeeinrichtungen nur akzeptiert, wenn die Signale innerhalb eines vorgegebenen und ggf. auch änderbaren Zeitfensters eintreffen. So ist es beispielsweise möglich, dass die Empfangseinrichtung so eingestellt wird, dass die beiden von den Sendeeinrichtungen ausgegebenen Signale innerhalb eines Zeitfensters eintreffen müssen, der kleiner ist als 100 ms. Auf diese Weise erfolgt unabhängig eine Positionserfassung und auch eine Produkterfassung, das heißt eine Erfassung des Formatteiles.

Bei einer weiteren vorteilhaften Ausführungsform ist das von der zweiten Sendeeinrichtung ausgegebene Signal nur in einem vorgegebenen geometrischen Bereich der Vorrichtung erfassbar. Dabei kann es sich beispielsweise um den Nahsendebereich eines RFID-tags handeln.

Vorteilhaft wird also als zweite Sendeeinrichtung ein RFID-tag verwendet. Es wäre jedoch auch möglich, dass es sich bei der zweiten Sendeeinrichtung um optische, akustische oder sonstige Sendeeinrichtungen handelt, deren Signale bevorzugt nur in einem bestimmten vorgegebenen Bereich abgefragt werden können. Auch wäre es möglich, dass die zweite Sendeeinrichtung ein bestimmter Bereich der Maschine oder eines Trägers ist, den der Benutzer oder beispielsweise die Empfangseinrichtung berühren muss, so dass auf diese Weise sichergestellt ist, dass sich die Empfangseinrichtung in einem geometrischen vorgegebenen Bereich befindet. Damit ist in diesem Zusammenhang der Begriff der zweiten Sendeeinrichtung dahingehend zu verstehen, dass irgendein Signal ausgegeben wird, wobei es sich hierbei im einfachen Fall um ein Schließen eines Stromkreises beispielsweise bei berührungsempfindlichen Anlagenteilen handeln kann.

Auch wäre es möglich, dass neben oder anstelle der zweiten Sendeeinrichtung eine Empfangseinrichtung vorgesehen ist, die ein entsprechendes zweites Signal aufnimmt, und nur, falls ein derartiges Signal aufgenommen wird, den Umrüstvorgang zulässt.

Vorteilhaft ist die erste Sendeeinrichtung eine RFID-basierte Sendeeinrichtung. So ist es bevorzugt möglich, dass an dem Formatteil ein RFID-tag angeordnet ist, der insbesondere mittels der Empfangseinrichtung ausgelesen werden kann. Vorteilhaft ist die erste Sendeeinrichtung eine fremdversorgte Sendeeinrichtung, welche beispielsweise mittels einer Antenne aktiviert werden kann, um in der Folge die entsprechenden Signale auszugeben.

Bei einer weiteren vorteilhaften Ausführungsform ist die Behandlungseinrichtung aus einer Gruppe von Einrichtungen ausgewählt, welche Umformungseinrichtungen zum Umformen von Kunststoffvorformlingen zu Kunststoffbehältnissen, Fülleinrichtungen zum Befüllen von Behältnissen, Etikettiereinrichtungen zum Etikettieren von Behältnissen, Verschließeinrichtungen zum Verschließen von Behältnissen, Transporteinrichtungen zum Transportieren der Behältnisse und dergleichen enthält. Bei den entsprechenden Formatteilen kann es sich beispielsweise um Schienenteile zum Transport der Behältnisse handeln, um Blasformen, um Reckstangen, um Blasdüsen und dergleichen.

Bei einer weiteren vorteilhaften Ausführungsform kommuniziert die erste Sendeeinrichtung mit der zweiten Sendeeinrichtung. So ist es beispielsweise möglich, dass die zweite Sendeeinrichtung ein Signal ausgibt und nur, wenn dieses von der ersten Sendeeinrichtung erfasst wird, diese ebenfalls ein entsprechendes Signal ausgibt. Auf diese Weise kann sichergestellt werden, dass die erste Sendeeinrichtung in einem Nahbereich der zweiten Sendeeinrichtung angeordnet ist. Auch wäre es möglich, dass die zweite Sendeeinrichtung einen Aktivierungsimpuls ausgibt, der die erste Sendeeinrichtung erst aktiviert. Auf diese Weise kann sichergestellt werden, dass die erste Sendeeinrichtung nur dann Signale ausgeben kann, wenn sie sich in einem bestimmten Bereich der zweiten Sendeeinrichtung befindet.

Die vorliegende Erfindung ist weiterhin auf ein Verfahren zum Betreiben einer Vorrichtung zum Behandeln von Behältnissen gerichtet, wobei ein wechselbares Formatteil, welches zum Betrieb der Vorrichtung nötig ist, an der Anlage montiert bzw. angeordnet wird und wobei mittels einer Empfangseinrichtung ein Signal empfangen wird, welches von einer ersten Sendeeinrichtung ausgegeben wird, wobei diese Sendeeinrichtung an dem Formatteil angeordnet ist, und dieses Signal charakteristisch für das Formatteil ist.

Erfindungsgemäß wird von einer zweiten Sendeeinrichtung ein zweites Signal ausgegeben oder empfangen und auf Basis des zweiten Signals wird ermittelt, ob das Formatteil in einer vorgegebenen Position gegenüber der Vorrichtung ist.

Unter dem Begriff einer Ermittlung auf Basis des zweiten Signals wird verstanden, dass dieses zweite Signal oder ein hieraus abgeleitetes Signal in wenigstens einem Schritt des Rüstvorganges verwendet wird um sicherzustellen, dass das Formatteil an dem korrekten Bereich der Anlage angeordnet wird.

Vorteilhaft sind die Signale unabhängig voneinander, das heißt, insbesondere werden Signale unabhängig voneinander ausgegeben. Vorteilhaft befindet sich die zweite Sendeeinrichtung bzw. die Signalkommunikationseinrichtung nicht an dem Formatteil sondern ist bevorzugt fest an der Vorrichtung angeordnet.

In einem weiteren vorteilhaften Verfahren wird ein zeitlicher Abstand zwischen den beiden Signalen erfasst. So ist es wiederum möglich, dass zunächst die erste Sendeeinrichtung aktiviert wird und anschließend überprüft wird, ob die beiden Signale bei der Empfangseinrichtung in einem vorgegebenen Zeitfenster angekommen sind. Weiterhin wäre es auch denkbar, dass die Sendeeinrichtung derart ausgestaltet ist, dass sie miteinander kommunizieren, das heißt, es wäre möglich, dass die betreffenden Sendeeinrichtungen, die bevorzugt als RFID-Tags ausgestattet sind als Master-Slave-Kombination eingesetzt werden. Weiterhin wäre es auch möglich, diese beiden Sendeeinrichtungen elektrisch leitfähig zu verbinden bzw. induktiv, kapazitiv oder optisch miteinander zu koppeln.

Auch durch das erfindungsgemäße Verfahren ist es daher möglich, Formatteile in der einzusetzenden Position zu bestimmen und ein Fehlrüsten ggf. auch ein missbräuchliches Einlesen der Sendeeinrichtung oder Tags zu vermeiden. Dabei wäre es auch möglich, dass die Sendeeinrichtungen an schwer zugänglichen Positionen der Vorrichtung angeordnet werden, beispielsweise innerhalb einer Blasform und die Informationen mittels Kopplung durch den Blasformträger übertragen wird, wobei bevorzugt der Blasformträger wiederum einen Scheib-Lese-Kopf an einer zugängigen Position aufweist.

Weitere Vorteile und Ausführungsformen ergeben sich aus den beigefügten Zeichnungen.

Darin zeigen:
- Fig. 1: eine grobschematische Darstellung einer Vorrichtung zum Behandeln von Behältnissen; und
- Fig. 2: eine Veranschaulichung der vorliegenden Erfindung.

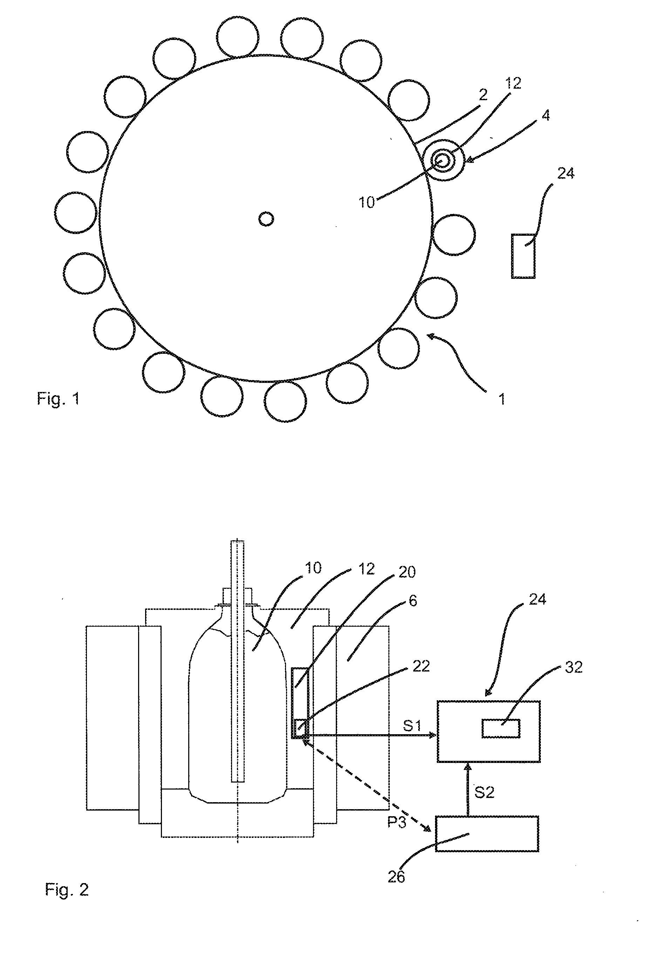

Figur 1 zeigt ein Beispiel für eine Anwendung der vorliegenden Erfindung. Dabei bezieht sich das Bezugszeichen 1 auf eine Vorrichtung zum Umformen von Kunststoffvorformlingen zu Kunststoffbehältnissen wie beispielsweise eine Streckblasmaschine. Es wird jedoch an dieser Stelle darauf hingewiesen, dass die Erfindung auch bei anderen Maschinen im Bereich der Getränke herstellenden Industrie Anwendung finden kann, bei denen Formatteile auszuwechseln sind. Bei den Formatteilen kann es sich um unterschiedlichste Bauteile handeln wie beispielsweise Blasformen, Schienenführungen, Reckstangen und dergleichen.

Die Vorrichtung 1 weist hier eine Transporteinrichtung 2 auf, um die Behältnisse 10 (schematisch dargestellt) zu transportieren. Bei dieser Transporteinrichtung handelt es sich hier um ein Blasrad 2, an dem eine Vielzahl von Behandlungseinrichtungen 4 in Form von Blasstationen 4 angeordnet ist. Jede Blasstation 4 weist dabei Blasformträger auf, an denen wiederum auswechselbare Blasformen 12 angeordnet sind. Bei diesen Blasformen handelt es sich hier um die auswechselbaren Formatteile, die in Abhängigkeit beispielsweise von dem zu expandierenden Behältnis ausgewechselt werden können. Das Bezugszeichen 24 bezieht sich auf eine (insbesondere mobile) Empfangseinrichtung um Empfang von Signalen (beispielsweise um ein Handlesegerät).

Figur 2 zeigt eine schematische Darstellung zur Veranschaulichung der Erfindung. Auch hier erkennt man wieder das Formatteil 12 bzw. die Blasform, die an einem Blasformträger 6 angeordnet ist. Die Blasform ist hier mehrteilig aufgebaut und weist zwei Seitenteile und ein Bodenteil 14 auf. Dabei wäre es möglich, dass sämtliche dieser Teile jeweils Sendeeinrichtungen aufweisen, es wäre jedoch auch möglich, dass lediglich eine dieser Sendeeinrichtungen 22 vorgesehen ist.

Diese Sendeeinrichtung 22 befindet sich auf einem in seiner Gesamtheit mit 20 bezeichneten Träger wie beispielsweise einem RFID-Tag. Diese Sendeeinrichtung ist in der Lage, ein bestimmtes Signal S1 auszusenden, welches für diese Sendeeinrichtung 22 und damit auch für das betreffende Formatteil 12 charakteristisch ist und dieses eindeutig identifiziert.

Dieses Signal S1 wird dabei an die Empfangseinrichtung 24 ausgegeben, so dass identifiziert werden kann, welches Formatteil jeweils vorliegt. Die Empfangseinrichtung kann an sich aus dem Stand der Technik bekannte Mittel aufweisen wie beispielsweise Antennen, um die Sendeeinrichtung 22 bzw. den gesamten RFID-Tag 20 anzuregen.

Das Bezugszeichen 26 bezieht sich auf eine weitere Signalkommunikationseinrichtung, die ebenfalls vorteilhaft fest an der Vorrichtung bzw. auch an einem Gestell angeordnet ist. Bei dieser Signalkommunikationseinrichtung handelt es sich bevorzugt um eine weitere Sendeeinrichtung, die ebenfalls ein Signal S2 an die Empfangseinrichtung 24 ausgibt.

Das Bezugszeichen 32 kennzeichnet eine Zeiterfassungseinheit, die beispielsweise einen zeitlichen Abstand der beiden Signale S1 und S2 bestimmen kann. Nur falls dieser Zeitwert einen bestimmten Grenzwert unterschreitet, kann hieraus geschlossen werden, dass nicht nur das korrekte Formatteil 12 das Signal ausgegeben hat, sondern dass es auch an dem korrekten Träger 6 angeordnet ist und sich nicht etwa an falscher Stelle befindet. Bei der zweiten Signalkommunikationseinrichtung kann es sich ebenfalls um einen RFID-Tag handeln, der auch von der Empfangseinrichtung 24 angeregt werden kann um so ein eindeutig identifizierbares Signal S2 auszugeben.

So kann vorgesehen sein, dass sich die beiden Sendeeinrichtungen 22 und 26 in dem Nahbereich der Empfangseinrichtung 24 befinden müssen um gemeinsam abgetastet zu werden. Auf diese Weise wird auch wie erwähnt eine korrekte Anordnung d. h. die richtige Platzierung sichergestellt. Daneben könnte sich die zweite Sendeeinrichtung auch an dem Blasformträger 6 befinden und selbst wiederum ein Signal der ersten Sendeeinrichtung 22 abfragen.

Es wäre jedoch auch möglich, dass die zweite Kommunikationseinrichtung an dem Formatteil 12 angeordnet ist und beispielsweise eine korrekte Verriegelungssituation gegenüber dem Blasformträger abfrägt. Entsprechend kann auch ein derartiges Signal wieder an die Empfangseinrichtung 24 ausgegeben werden so dass sichergestellt ist, dass das richtige Formatteil an den richtigen Träger 6 angeordnet ist.

Weiterhin ist es auch möglich, dass die erste Sendeeinrichtung 22 und die zweite Signalkommunikationseinrichtung 26 miteinander kommunizieren (Pfeil P3) so dass beispielsweise die Signalkommunikationseinrichtung auch an die Sendeeinrichtung 22 ein Signal ausgibt und diese wiederum in Reaktion darauf das Signal an die Empfangseinrichtung. Insbesondere sind jedoch die erste Sendeeinrichtung 22 und die Signalkommunikationseinrichtung 26 unabhängig voneinander so dass sichergestellt ist, dass nicht regelmäßig in Reaktion auf ein Signal S1 auch ein Signal S2 ausgegeben wird.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Vorrichtung
- 2: Transporteinrichtung, Blasrad
- 4: Blasstation, Behandlungseinrichtung
- 6: Blasformträger
- 10: Behältnis
- 12: Formteil, Blasform
- 14: Bodenteil
- 20: RFID-tag
- 22: Sendeeinrichtung
- 24: Empfangseinrichtung
- 26: Signalkommunikationseinrichtung, Sendeeinrichtung
- 32: Zeiterfassungseinheit
- S1: Signal
- S2: Signal
- P3: Pfeil

## Patentansprüche

1. Vorrichtung (1) zum Behandeln von Behältnissen (10) mit wenigstens einer Transporteinrichtung (2), welche die Behältnisse (10) entlang eines vorgegebenen Transportpfades transportiert und wenigstens einer Behandlungseinrichtung, welche das Behältnis in einer vorbestimmten Weise behandelt, wobei die Vorrichtung (1) wenigstens ein Formatteil (12) aufweist, welches wechselbar an einem Träger anordenbar ist, und wobei
an dem Formatteil eine erste Sendeeinrichtung (22) angeordnet ist, welche wenigstens zeitweise ein Signal (S1) ausgibt, welches für diese Sendeeinrichtung charakteristisch ist und die Vorrichtung wenigstens eine erste Empfangseinrichtung (24) zum Empfang des ersten Signals (S1) aufweist, **dadurch gekennzeichnet, dass** weiterhin die Vorrichtung (1) eine zweite Sendeeinrichtung (26) aufweist, welche ein zweites charakteristisches Signal (S2) ausgibt, wobei die Empfangseinrichtung (24) derart gestaltet ist, dass sie aus den ausgegebenen Signalen (S1, S2) bestimmt, ob das Formatteil in einer vorgegebenen Position gegenüber der Vorrichtung (1) ist.

2. Vorrichtung (1) nach Anspruch 1,
**dadurch gekennzeichnet, dass**
die zweite Sendeeinrichtung ortsfest gegenüber der Vorrichtung (1) angeordnet ist.

3. Vorrichtung (1) nach wenigstens einem der vorangegangenen Ansprüche,
**dadurch gekennzeichnet, dass**
die Empfangseinrichtung (24) eine Zeiterfassungseinrichtung (32) aufweist, welche einen zeitlichen Abstand zwischen zwei von ihr empfangenen Signalen (S1, S2) bestimmt.

4. Vorrichtung (1) nach wenigstens einem der vorangegangenen Ansprüche,
**dadurch gekennzeichnet, dass**
das von der zweiten Sendeeinrichtung (26) ausgegebene Signal nur in einem vorgegebenen geometrischen Bereich (B1) der Vorrichtung erfassbar ist.

5. Vorrichtung (1) nach wenigstens einem der vorangegangenen Ansprüche,
**dadurch gekennzeichnet, dass**
die erste Sendeeinrichtung (22) eine RFID - basierte Sendeeinrichtung (22) ist.

6. Vorrichtung (1) nach wenigstens einem der vorangegangenen Ansprüche,
**dadurch gekennzeichnet, dass**
die Behandlungseinrichtung aus einer Gruppe von Einrichtungen ausgewählt ist, welche Umformungseinrichtungen zum Umformen von Kunststoffvorformlingen zu Kunststoffbehältnissen, Fülleinrichtungen zum Befüllen von Behältnissen, Etikettiereinrichtungen zu Etikettieren von Behältnissen, Verschließeinrichtungen zum Verschließen von Behältnissen, Transporteinrichtungen zum Transportieren der Behältnisse und dergleichen enthält.

7. Vorrichtung (1) nach wenigstens einem der vorangegangenen Ansprüche,
**dadurch gekennzeichnet, dass**
die erste Sendeeinrichtung (22) mit der zweiten Sendeeinrichtung (26) kommuniziert.

8. Verfahren zum Betreiben einer Vorrichtung (1) zum Behandeln von Behältnissen, wobei ein wechselbares Formatteil (12), welches zum Betrieb der Vorrichtung (1) nötig ist, an der Vorrichtung (1) angeordnet wird und wobei mittels einer Empfangseinrichtung (24) ein Signal (S1) empfangen wird, welches von einer ersten Sendeeinrichtung (22) ausgegeben wird, wobei diese erste Sendeeinrichtung (22) an dem Formatteil angeordnet ist und dieses Signal (S1) charakteristisch für das Formatteil (12) ist,
**dadurch gekennzeichnet, dass**
von einer zweiten Sendeeinrichtung (26) ein zweites Signal (S2) ausgegeben wird und auf Basis des zweiten Signals (S2) ermittelt wird, ob das Formatteil (12) in einer vorgegebenen Position (12) gegenüber der Vorrichtung (1) ist.

9. Verfahren nach Anspruch 8,
**dadurch gekennzeichnet, dass** die Signale (S1, S2) unabhängig voneinander ausgegeben werden.

10. Verfahren nach wenigstens einem der vorangegangenen Ansprüche,
**dadurch gekennzeichnet, dass**
ein zeitlicher Abstand zwischen den beiden Signalen (S1, S2) erfasst wird.

## Claims

1. An apparatus (1) for the treatment of containers (10) with at least one conveying device (2) which conveys the containers (10) along a pre-set conveying path, and at least one treatment device, which treats the container in a pre-determined manner, wherein the apparatus (1) has at least one size part (12) which is capable of being arranged in an exchangeable manner on a carrier,
and wherein
a first transmitter device (22), which at least intermittently emits a signal (S1) which is characteristic of this transmitter device, is arranged on the size part, and the apparatus has at least one first receiver device (24) for receiving the first signal (S1), **characterized in that**, in addition, the apparatus (1) has a second transmitter device (26) which emits a second characteristic signal (S2), wherein the receiver device (24) is designed in such a way that it determines from the signals (S1, S2) emitted whether the size part is in a pre-determined position with respect to the apparatus (1).

2. An apparatus (1) according to claim 1, **characterized in that** the second transmitter device is arranged in a stationary manner with respect to the apparatus (1).

3. An apparatus (1) according to at least one of the preceding claims, **characterized in that** the receiver device (24) has a time-detection device (32) which determines a time interval between two signals (S1, S2) received by it.

4. An apparatus (1) according to at least one of the preceding claims, **characterized in that** the signal emitted by the second transmitter device (26) is capable of being detected only in a pre-set geometrical range (B1) of the apparatus.

5. An apparatus (1) according to at least one of the preceding claims, **characterized in that** the first transmitter device (22) is an RFID-based transmitter device (22).

6. An apparatus (1) according to at least one of the preceding claims, **characterized in that** the treatment device is selected from a group of devices which includes shaping devices for shaping plastics-material pre-forms into plastics-material containers, filling devices for filling containers, labelling devices for labelling containers, closure devices for closing containers, conveying devices for conveying the containers and the like.

7. An apparatus (1) according to at least one of the preceding claims, **characterized in that** the first transmitter device (22) communicates with the second transmitter device (26).

8. A method of operating an apparatus (1) for the treatment of containers, wherein an exchangeable size part (12) which is necessary for operating the apparatus (1) is arranged on the apparatus (1) and wherein a signal (S1) which is emitted by a first transmitter device (22) is received by means of a receiver device (24), wherein this first transmitter device (22) is arranged on the size part, and this signal (S1) is characteristic of the size part (12),
**characterized in that**
a second signal (S2) is emitted by a second transmitter device (26), and on the basis of the second signal (S2) it is determined whether the size part (12) is in a pre-determined position (12) with respect to the apparatus (1).

9. A method according to claim 8, **characterized in that** the signals (S1, S2) are emitted independently of each other.

10. A method according to at least one of the preceding claims, **characterized in that** a time interval between the two signals (S1, S2) is detected.

## Revendications

1. Installation (1) pour le traitement de récipients (10), avec au moins un dispositif de transport (2) convoyant les récipients (10) le long d'un chemin de transport défini et au moins un dispositif de traitement traitant le récipient de manière définie, ladite installation (1) comportant au moins un gabarit (12) pouvant être disposé de manière remplaçable sur un support, et
un premier dispositif émetteur (22) étant monté sur le gabarit, lequel émet au moins temporairement un signal (S1) caractéristique pour ce dispositif émetteur, et l'installation comportant au moins un premier dispositif récepteur (24) pour la réception du premier signal (S1), **caractérisé en ce que** l'installation (1) comporte en outre un deuxième dispositif émetteur (26), lequel émet un deuxième signal (S2) caractéristique, le dispositif récepteur (24) étant configuré de manière à déterminer sur la base des signaux (S1, S2) émis si le gabarit est dans une position prescrite par rapport à l'installation (1).

2. Installation (1) selon la revendication 1, **caractérisée en ce que**
le deuxième dispositif émetteur est disposé à un emplacement fixe par rapport à l'installation (1).

3. Installation (1) selon au moins une des revendications précédentes, **caractérisée en ce que**
le dispositif récepteur (24) comporte un dispositif de détection temporelle (32) déterminant un intervalle temporel entre deux signaux (S1, S2) reçus par lui.

4. Installation (1) selon au moins une des revendications précédentes, **caractérisée en ce que**
le signal émis par le deuxième dispositif émetteur (26) ne peut être détecté que dans une zone géométrique (B1) définie de l'installation.

5. Installation (1) selon au moins une des revendications précédentes, **caractérisée en ce que**
le premier dispositif émetteur (22) est un dispositif émetteur (22) à base RFID.

6. Installation (1) selon au moins une des revendications précédentes, **caractérisée en ce que**
le dispositif de traitement est sélectionné dans un groupe de dispositifs comprenant des dispositifs de transformation pour la transformation de préformes en matière plastique en récipients en matière plastique, des dispositifs de remplissage pour le remplissage de récipients, des dispositifs d'étiquetage pour l'étiquetage de récipients, des dispositifs de fermeture pour le bouchage de récipients, des dispositif de transport pour le convoyage de récipients et des dispositifs similaires.

7. Installation (1) selon au moins une des revendications précédentes, **caractérisée en ce que**
le premier dispositif émetteur (22) communique avec le deuxième dispositif émetteur (26).

8. Procédé de fonctionnement d'une installation (1) pour le traitement de récipients, dans lequel un gabarit (12) remplaçable, indispensable au fonctionnement de l'installation (1), est disposé sur l'installation (1), et dans lequel un signal (S1) émis par un premier dispositif émetteur (22) est reçu au moyen d'un dispositif récepteur (24), ledit premier dispositif émetteur (22) étant monté sur le gabarit et ledit signal (S1) étant caractéristique pour le gabarit (12), **caractérisé en ce qu'**
un deuxième signal (S2) est émis par un deuxième dispositif émetteur (26) et **en ce qu'**il est déterminé sur la base du deuxième signal (S2) si le gabarit (12) est dans une position (12) prescrite par rapport à l'installation (1).

9. Procédé selon la revendication 8, **caractérisé en ce que** les signaux (S1, S2) sont émis indépendamment l'un de l'autre.

10. Procédé selon au moins une des revendications précédentes, **caractérisé en ce qu'**
un intervalle temporel est détecté entre les deux signaux (S1, S2).
